# EUROPEAN PATENT APPLICATION

(11) **EP 4 848 202 A1**
(43) Date of publication of application: **02.12.2026**
(21) Application number: 26172895.0
(22) Date of filing: 16.04.2026
(51) Int. Cl.: G06T 7/00, G06T 7/11

(54) **SUPPORT APPARATUS, SUPPORT METHOD, AND PROGRAM**

(30) Priority: 29.05.2025 JP 2025089437
(71) Applicant: OMRON Corporation, Kyoto-shi, Kyoto 600-8530 (JP)
(72) Inventor: Yasuyuki, IKEDA, Kyoto-shi, 600-8530 (JP)
(74) Representative: Mewburn Ellis LLP

(57) **Abstract**

A support apparatus (100) includes a setting unit (13) that sets a defect region (21) included in a defective product image (20), a determination unit (14) that determines a set of the defective product image (20) and annotation information (28) indicating the defect region (21) as a data candidate for training or evaluation of a trained model, and a deep learning model (11). The deep learning model (11) is trained to perform segmentation on an inputted image and to output an attention segment (71, 81_1) including a foreground position designated in the inputted image. In response to reception of a one-click operation, the setting unit (13) designates a position indicated by a cursor (3) as the foreground position for the deep learning model (11) and sets the attention segment (71) outputted from the deep learning model (11) as the defect region (21). Time required for generation of the trained model that judges whether or not a defect is included in a product seen in an inspection target image is thus reduced.

## Description

### CROSS REFERENCE TO RELATED APPLICATIONS

This nonprovisional application is based on Japanese Patent Application No. 2025-089437 filed with the Japan Patent Office on May 29, 2025, the entire contents of which are hereby incorporated by reference.

### BACKGROUND OF THE INVENTION

### Field of the Invention

The present disclosure relates to a support apparatus, a support method, and a program.

### Description of the Background Art

In an appearance inspection apparatus that inspects whether or not there is a defect of a product based on an image, in order to automatically sense the defect from the image where the product is seen, a trained model obtained by machine learning has recently been used. The trained model is trained with training data including an image where a defect region has been designated. Therefore, annotation that designates the defect region in a defective product image where a defective product is seen is essential as preparation for generation of the trained model.

Japanese Patent Laying-Open No. 2023-77051 discloses a setting apparatus including an input portion that accepts designation of a defect region for a defective product image. The input portion is configured such that a region designation mode in which the defect region is designated by enclosing the defect region in the defective product image or a precise designation mode in which the defect region is designated in a free form by tracing the defect region in the defective product image is selectable.

### SUMMARY OF THE INVENTION

Even when the setting apparatus disclosed in Japanese Patent Laying-Open No. 2023-77051 is used, annotation for designation of the defect region takes time. Consequently, generation of the trained model also takes considerable time.

The present disclosure was made in view of such circumstances, and an object thereof is to provide a support apparatus, a support method, and a program that allow reduction in time required for generation of a trained model for judgment as to whether or not a defect is included in a product seen in an image to be inspected (inspection target image).

A support apparatus according to one aspect of the present disclosure supports generation of a trained model for inspecting whether a defect is included in a product seen in an inspection target image. The support apparatus includes a display controller that controls a display to show a defective product image where a defective product is seen and an input interface that accepts an operation on a cursor on the defective product image. The support apparatus further includes a setting unit that sets a defect region included in the defective product image in accordance with the operation, a determination unit that determines a set of the defective product image and annotation information indicating the defect region as a data candidate for training or evaluation of the trained model, and a deep learning model. The deep learning model is trained to perform segmentation on an inputted image and to output an attention segment including a foreground position designated within the inputted image. In response to reception of a first one-click operation by the input interface, the setting unit designates for the deep learning model, as the foreground position, a first position indicated by the cursor at the time of the first one-click operation and sets a first attention segment outputted from the deep learning model as the defect region.

According to this disclosure, a user can designate the defect region simply by performing the first one-click operation. Consequently, time required for annotation for designation of the defect region is reduced and time required for generation of the trained model is also reduced.

In the disclosure described above, the deep learning model is further trained to output, in response to designation of a background position within the attention segment, a sub-attention segment in the attention segment, the sub-attention segment including the foreground position and not including the background position. The input interface accepts a second one-click operation while the cursor indicates a second position within the first attention segment after the first one-click operation. In response to the second one-click operation, the setting unit designates the second position as the background position for the deep learning model and reduces the defect region to the sub-attention segment outputted from the deep learning model.

According to this disclosure, when the defect region set in response to the first one-click operation is too large, the user can reduce the defect region to a range without an unnecessary position, simply by performing the second one-click operation. Consequently, time required for annotation for designation of the defect region is reduced.

In the disclosure described above, the input interface accepts a third one-click operation while the cursor indicates a third position outside the first attention segment after the first one-click operation. In response to the third one-click operation, the setting unit designates the third position for the deep learning model and sets a second attention segment outputted from the deep learning model as a new defect region.

According to this disclosure, the user can readily set a plurality of defect regions by repeatedly performing the one-click operation.

In the disclosure described above, the setting unit extracts a partial image including the first position and having a specific size from the defective product image. The setting unit then receives the attention segment outputted from the deep learning model as the first attention segment, by inputting the partial image to the deep learning model.

The deep learning model performs segmentation on the entire inputted image. Therefore, when the entire defective product image is inputted to the deep learning model in an example where the size of the defect is considerably smaller than the size of the entire defective product image, the deep learning model may output a wide range including the defect and surroundings thereof as the attention segment. According to the disclosure above, not the entire defective product image but the partial image including the first position and having the specific size is inputted to the deep learning model. Therefore, in the attention segment outputted from the deep learning model, pixels where surroundings of the defect are seen may decrease. Accuracy of setting of the defect region by the setting unit is thus enhanced.

In the disclosure described above, the specific size is variable in accordance with a user input. According to this disclosure, the user can set the specific size to a desired size suitable for the defect.

In the disclosure described above, on the display, the defective product image is shown as being enlarged in accordance with a magnification factor designated by a user input. The specific size when a first magnification factor is designated is smaller than the specific size when a second magnification factor higher than the first magnification factor is designated.

In an example where the magnification factor is high, the user is assumed to pay attention to a defect relatively small in size. According to the disclosure above, the specific size is smaller as the magnification factor is higher. Therefore, accuracy of setting of the defect region is further enhanced.

In the disclosure described above, the operation includes a drag operation. The setting unit incorporates into the defect region, a drawn region in the defective product image resulting from the drag operation.

According to this disclosure, the user can incorporate a region manually drawn by the drag operation into the defect region set by using the deep learning model.

In the disclosure described above, the deep learning model is further trained to track, in an image subsequent to the inputted image, an object seen in the attention segment outputted in connection with the inputted image and to output a tracking segment where the object is seen in connection with the subsequent image. The setting unit includes a first mode in which the defect region is set in accordance with the operation and additionally includes a second mode in which the defect region within the defective product image is set by using a sample image. In response to selection of the second mode, the setting unit sets as the defect region, the tracking segment outputted from the deep learning model when the defective product image and a designated region in the sample image are inputted to the deep learning model as the subsequent image and the attention segment.

According to this disclosure, the user can automatically set the defect region for at least one defective product image, simply by preparing the sample image.

A support method according to one aspect of the present disclosure is performed by a computer for supporting generation of a trained model for inspecting whether a defect is included in a product seen in an inspection target image. The computer includes a deep learning model, and the deep learning model is trained to perform segmentation on an inputted image and to output an attention segment including a foreground position designated within the inputted image. The support method includes causing, by at least one processor of the computer, a display to show a defective product image where a defective product is seen and setting, by the at least one processor, a defect region included in the defective product image in accordance with an operation on a cursor on the defective product image. The support method further includes determining, by the at least one processor, a set of the defective product image and annotation information indicating the defect region as a data candidate for training or evaluation of the trained mode. The operation includes a one-click operation. The setting includes designating for the deep learning model, as the foreground position, a position indicated by the cursor at the time of the one-click operation, in response to the one-click operation, and setting the attention segment outputted from the deep learning model as the defect region.

A program according to one aspect of the present disclosure causes a computer to perform the support method above. According to these disclosures as well, time required for generation of the trained model is reduced.

The foregoing and other objects, features, aspects and advantages of this invention will become more apparent from the following detailed description of this invention when taken in conjunction with the accompanying drawings.

### BRIEF DESCRIPTION OF THE DRAWINGS

Fig. 1 is a diagram showing an exemplary support system according to an embodiment.
Fig. 2 is a schematic diagram showing a configuration of an image inspection apparatus according to the embodiment.
Fig. 3 is a flowchart showing an exemplary flow of processing in the image inspection apparatus.
Fig. 4 is a flowchart showing an exemplary flow of a sub routine of step S2 shown in Fig. 3.
Fig. 5 is a diagram showing an exemplary setting screen shown on a display in step S11.
Fig. 6 is a flowchart showing a flow of a part of a sub routine of step S12 shown in Fig. 4.
Fig. 7 is a flowchart showing a flow of a remainder of the sub routine of step S12 shown in Fig. 4.
Fig. 8 is a diagram illustrating processing in steps S22 to S25 shown in Fig. 6.
Fig. 9 is a diagram illustrating processing in steps S26 to S28 shown in Fig. 6.
Fig. 10 is a diagram showing exemplary setting processing performed three times in the order of a semi-automatic mode, a manual mode, and a class selection mode.
Fig. 11 is a diagram illustrating a tracking function provided by a deep learning model.
Fig. 12 is a flowchart showing a flow of the sub routine of step S12 in the image inspection apparatus according to a first modification.
Fig. 13 is a diagram illustrating processing in steps S41 to S44 shown in Fig. 12.

### DESCRIPTION OF THE PREFERRED EMBODIMENTS

An embodiment of the present invention will be described in detail with reference to the drawings. The same or corresponding elements in the drawings have the same reference characters allotted and description thereof will not be repeated.

### §1 Application

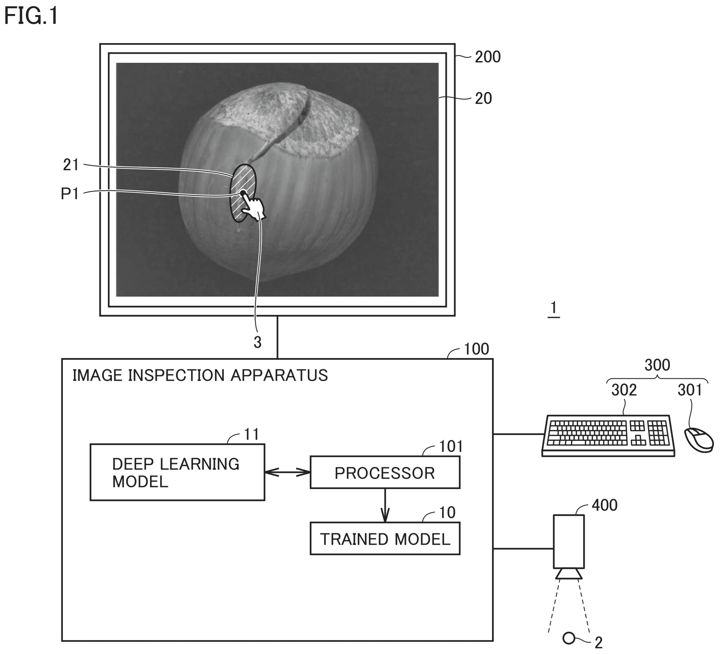

An exemplary scene to which the present invention is applied will initially be described with reference to Fig. 1. Fig. 1 is a diagram showing an exemplary support system according to an embodiment. A support system 1 supports generation of a trained model 10 that judges whether or not a defect is included in a product 2 seen in an inspection target image. As shown in Fig. 1, support system 1 includes an image inspection apparatus 100, a display 200, an input apparatus 300, and a camera 400.

Image inspection apparatus 100 is a computer configured to support generation of trained model 10 for inspecting whether or not a defect is included in product 2 seen in the inspection target image and to perform image inspection using generated trained model 10.

Image inspection apparatus 100 may be implemented by at least one computer, at least one virtual machine constructed on a cloud environment, or combination thereof.

Display 200 is, for example, a liquid crystal display. Display 200 is connected to image inspection apparatus 100 and shows various screens outputted from image inspection apparatus 100.

Input apparatus 300 accepts a user input. Input apparatus 300 includes, for example, a mouse 301 and a keyboard 302. Input apparatus 300 is connected to image inspection apparatus 100 and outputs a signal in accordance with the user input to image inspection apparatus 100.

Camera 400 shoots a subject present within a field of view. Camera 400 is set to include product 2 in the field of view thereof. Camera 400 is connected to image inspection apparatus 100 and outputs an image obtained by shooting to image inspection apparatus 100.

Image inspection apparatus 100 is provided with a deep learning model 11. Deep learning model 11 is trained to perform segmentation on an inputted image and to output an attention segment including a designated foreground position.

Image inspection apparatus 100 includes a processor 101. In an example where image inspection apparatus 100 is implemented by a plurality of computers, processor 101 may include a plurality of processors.

Processor 101 performs processing below in order to support generation of trained model 10. Initially, processor 101 has display 200 show a defective product image 20 where a defective product is seen. Processor 101 then accepts an operation on a cursor 3 on defective product image 20. Processor 101 sets a defect region included in defective product image 20 in accordance with the operation. Processor 101 then determines defective product image 20 and annotation information indicating the defect region as a data candidate for training or evaluation of trained model 10.

In the present embodiment, processor 101 performs a function to set the defect region in response to a one-click operation in order to reduce time required for annotation for designation of the defect region. In other words, processor 101 specifies a position P1 of cursor 3 in defective product image 20 in response to the one-click operation. Processor 101 inputs defective product image 20 or a partial image including position P1 in defective product image 20 to deep learning model 11 and designates position P1 as the foreground position for deep learning model 11. Deep learning model 11 thus performs segmentation on defective product image 20 or the partial image and outputs an attention segment including position P1 designated as the foreground position. Processor 101 sets the attention segment outputted from deep learning model 11 as a defect region 21.

A user can thus designate defect region 21 simply by performing the one-click operation. Consequently, time required for annotation for designation of defect region 21 is reduced and time required for generation of trained model 10 is also reduced.

### §2 Specific Example

### <Configuration of Image Inspection Apparatus>

Image inspection apparatus 100 is typically a computer with a general-purpose architecture, and performs various types of processing according to the present embodiment by executing a program (instruction code) installed in advance. Such a program is typically distributed as being stored in various recording media or installed in image inspection apparatus 100 over a network or the like.

In an example where such a general-purpose computer is employed, in addition to an application for performing the various types of processing according to the present embodiment, an operating system (OS) for performing basic processing of the computer may be installed. In this case, the program according to the present embodiment may call a necessary module in a prescribed sequence at prescribed timing from among program modules provided as a part of the OS and have the module perform processing. In other words, the program itself according to the present embodiment does not include the module as above but the processing may be performed in cooperation with the OS. The program according to the present embodiment may be in such a form not including at least one of modules.

Furthermore, the program according to the present embodiment may be provided as being incorporated in a part of another program. In this case again, the program itself does not include a module included in another program combined as above but the processing is performed in cooperation with another program. In other words, the program according to the present embodiment may be in such a form as being incorporated in another program. At least one or all of functions provided as a result of execution of the program may be implemented as dedicated hardware circuitry.

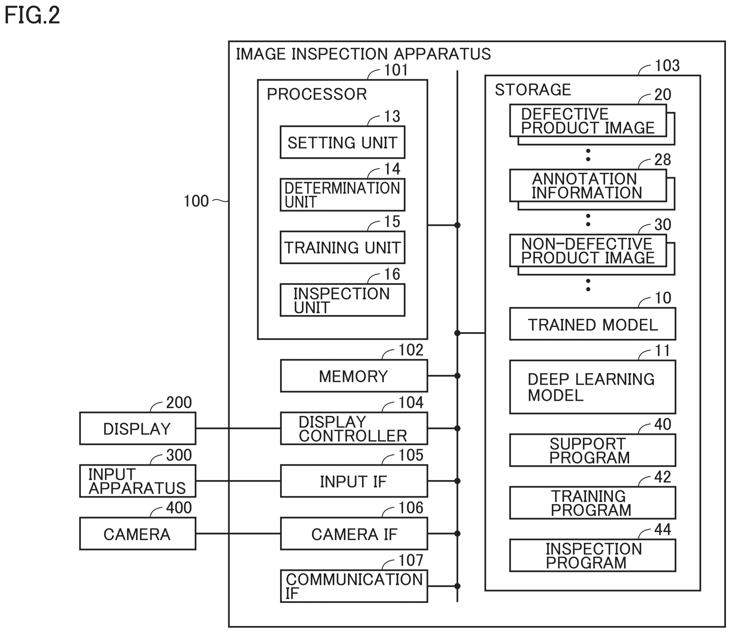

Fig. 2 is a schematic diagram showing a configuration of the image inspection apparatus according to the embodiment. As shown in Fig. 2, image inspection apparatus 100 includes processor 101, a memory 102, a storage 103, a display controller 104, an input interface 105, a camera interface 106, and a communication interface 107. These components are connected to communicate data with one another through a bus.

Processor 101 is implemented by a central processing unit (CPU), a micro processing unit (MPU), and the like. Processor 101 performs various types of processing by developing a program stored in storage 103 on memory 102 and executing the same.

Memory 102 is typically a volatile storage device such as a dynamic random access memory (DRAM), and a program read from storage 103, various types of data to be used for execution of the program, and the like are stored therein.

Display controller 104 is connected to display 200 and controls a screen of display 200 so as to notify a user of a result of processing or the like by processor 101. For example, display controller 104 has display 200 show defective product image 20 (see Fig. 1) where a defective product is seen.

Input interface 105 mediates data transmission between processor 101 and input apparatus 300. In other words, input interface 105 receives input information inputted to input apparatus 300 by the user.

Specifically, input interface 105 accepts an operation on cursor 3 on defective product image 20 while defective product image 20 is shown on display 200. Mouse 301 includes a left button and a right button. Therefore, the operation on cursor 3 includes a left one-click operation to click the left button once and a right one-click operation to click the right button once. The left one-click operation is an exemplary "first one-click operation" and an exemplary "third one-click operation" in the present disclosure. The right one-click operation is an exemplary "second one-click operation" in the present disclosure. Furthermore, the operation on cursor 3 includes a left drag operation to move cursor 3 while the left button is pressed down and a right drag operation to move cursor 3 while the right button is pressed down.

Camera interface 106 is connected to camera 400 and receives an image obtained by shooting by camera 400. The image received by camera interface 106 is stored in storage 103. The image received by camera interface 106 includes at least one defective product image 20 where the defective product is seen and at least one non-defective product image 30 where a non-defective product is seen. At least one defective product image 20 and at least one non-defective product image 30 are used for training or evaluation of trained model 10. Furthermore, the image received by camera interface 106 includes an inspection target image where pass/failure of product 2 is unclear.

Communication interface 107 is, for example, a wired local area network (LAN) module, a wireless LAN module, or the like, and it is an interface for wired or wireless communication over the network. Image inspection apparatus 100 communicates with another information processing apparatus by using communication interface 107.

Storage 103 is typically a non-volatile magnetic storage device such as a hard disk drive. Deep learning model 11 is stored in storage 103. Deep learning model 11 is trained in advance to perform segmentation on an inputted image and to output an attention segment including the designated foreground position. Specifically, the deep learning model is generated by deep learning using various images.

Furthermore, deep learning model 11 is trained to output, in response to designation of a background position within the attention segment, a sub-attention segment in the attention segment, the sub-attention segment including the foreground position and not including the background position.

Deep learning model 11 may include a known basic model for segmentation. For example, Segment Anything Model (SAM) or Segment Anything Model 2 (SAM2) published by Meta may be adopted as deep learning model 11.

Furthermore, a support program 40, a training program 42, and an inspection program 44 are stored in storage 103. A setting unit 13 and a determination unit 14 are implemented by execution of support program 40 by processor 101. A training unit 15 is implemented by execution of training program 42 by processor 101. An inspection unit 16 is implemented by execution of inspection program 44 by processor 101.

Setting unit 13 sets at least one defect region included in defective product image 20 in accordance with an operation on cursor 3. The defect region is one pixel or a set of pixels including a plurality of consecutive pixels. In response to acceptance of the left one-click operation by input interface 105, setting unit 13 designates position P1 indicated by cursor 3 at the time of the left one-click operation as the foreground position for deep learning model 11. At this time, setting unit 13 inputs defective product image 20 or a partial image including position P1 in the defective product image to deep learning model 11. Setting unit 13 sets an attention segment outputted from deep learning model 11 as defect region 21 (see Fig. 1).

Setting unit 13 repeatedly performs the processing above each time input interface 105 accepts the left one-click operation. Specifically, when cursor 3 indicates a position outside already-set defect region 21 at the time of the second left one-click operation, setting unit 13 adds an attention segment outputted from deep learning model 11 as a new defect region, in response to the second left one-click operation. When already-set defect region 21 and the new defect region are adjacent to each other, setting unit 13 may enlarge already-set defect region 21 to incorporate the new defect region therein.

When input interface 105 accepts the right one-click operation while cursor 3 is located within already-set defect region 21, setting unit 13 designates the position indicated by cursor 3 as the background position for deep learning model 11. As described above, the attention segment outputted from deep learning model 11 is set as defect region 21. Therefore, defect region 21 having already been set means that deep learning model 11 has already outputted the attention segment. Deep learning model 11 outputs a sub-attention segment in the attention segment, the sub-attention segment including position P1 designated as a foreground region and not including the position designated as the background position. Setting unit 13 reduces defect region 21 to the sub-attention segment outputted from deep learning model 11.

Determination unit 14 generates for each defective product image 20, annotation information 28 indicating a position of each of at least one defect region set by setting unit 13. Determination unit 14 has annotation information 28 stored in storage 103. Annotation information 28 may include a label indicating a class (which is referred to as a "class label" below) of a defect formed in each of the at least one defect region. The class of the defect includes, for example, a scratch, a dent, contamination, a cavity, and the like.

Determination unit 14 determines defective product image 20 and annotation information 28 as a data candidate for training or evaluation of trained model 10. In other words, data determined by determination unit 14 may include training data and evaluation data.

Training unit 15 generates trained model 10 by machine learning with at least a part (training data) of data determined by determination unit 14. A known algorithm (for example, a support vector machine, a neural network, or the like) may be adopted as a machine learning algorithm. Training unit 15 may use non-defective product image 30 for training in machine learning. Training unit 15 has generated trained model 10 stored in storage 103.

Trained model 10 is used for inspecting whether or not the defect is included in product 2 seen in the inspection target image. Therefore, trained model 10 is trained to output a score for an inputted image, the score indicating similarity to a feature of the defect for each pixel of the image or for each set of pixels having a prescribed size. Furthermore, in an example where annotation information 28 includes the class label, trained model 10 is trained to output the score for each class label.

Training unit 15 may evaluate inference performance of trained model 10 by using at least a part (evaluation data) of the data determined by determination unit 14. Furthermore, training unit 15 may evaluate the inference performance of trained model 10 by using non-defective product image 30 for evaluation.

Specifically, training unit 15 inputs defective product image 20 included in the data determined by determination unit 14 to trained model 10 and compares an output from trained model 10 with annotation information 28 included in the data determined by determination unit 14. Training unit 15 controls display controller 104 such that a result of comparison is shown on display 200. The user can thus evaluate the inference performance of trained model 10 by checking the score of the pixel corresponding to defect region 21 included in defective product image 20.

Similarly, training unit 15 inputs non-defective product image 30 to trained model 10 and controls display controller 104 such that the score outputted from trained model 10 is shown on display 200. The user can thus evaluate the inference performance of trained model 10.

Inspection unit 16 inspects whether or not a defect is included in the product seen in the inspection target image by using trained model 10. The inspection target image is successively obtained from camera 400. Inspection unit 16 inputs the inspection target image obtained from camera 400 to trained model 10 and compares the score outputted from trained model 10 with a predetermined threshold value. As described above, the score is outputted for each pixel or each set of pixels having the prescribed size. Inspection unit 16 determines that there is a defect in the pixel or the set of pixels corresponding to the score exceeding the threshold value, in the inspection target image. In an example where the score is outputted for each class label, inspection unit 16 specifies the class of the defect based on the class label corresponding to the score exceeding the threshold value. Inspection unit 16 controls display controller 104 such that a result of inspection is shown on display 200.

### <Overview of Flow of Processing in Image Inspection Apparatus>

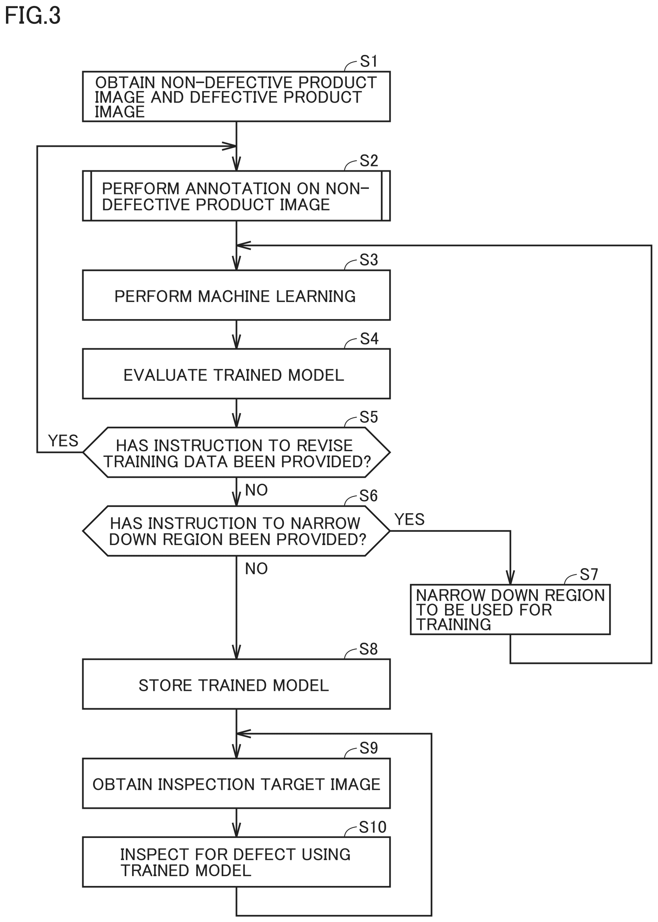

Fig. 3 is a flowchart showing an exemplary flow of processing in the image inspection apparatus. Initially in step S1, processor 101 accumulates non-defective product image 30 and defective product image 20 received from camera 400 in storage 103. In next step S2, processor 101 performs annotation on defective product image 20. Training data and evaluation data are thus generated. In next step S3, processor 101 generates trained model 10 by performing machine learning using the training data. In step S3, non-defective product image 30 may be used for machine learning.

In next step S4, processor 101 evaluates trained model 10 by using the evaluation data and non-defective product image 30 and controls display controller 104 such that a result of evaluation is shown on display 200. The user who has checked the result of evaluation selects one of actions (a) to (c) below:
(a) To store trained model 10;
(b) To narrow down a region to be used for machine learning in defective product image 20 indicated by the training data, to the foreground region (exclude a background region); and
(c) To revise the training data.
When trained model 10 is appropriate, the user selects the action (a). When the score is high in the background region of the image used for evaluation, the user selects the action (b). When accuracy in estimation by trained model 10 is low, the user selects the action (c).

In next step S5, processor 101 determines whether or not it has accepted an instruction to revise the training data. When processor 101 has received the instruction to revise the training data (YES in step S5), it has the process return to step S2. When processor 101 has not received the instruction to revise the training data (NO in step S5), it has the process proceed to step S6.

In step S6, processor 101 determines whether or not it has received an instruction to narrow down the region to be used for machine learning in defective product image 20 indicated by the training data. When processor 101 has received the instruction to narrow down the region (YES in step S6), in step S7, it narrows down the region to be used for machine learning in defective product image 20 indicated by the training data, in accordance with the user input received by input interface 105. For example, the user should only designate narrowing down to a region where the product is seen. After step S7, processor 101 has the process return to step S3. At this time, processor 101 performs machine learning using only the narrowed-down region.

When processor 101 has not received the instruction to narrow down the region (NO in step S6), in step S8, it regards the action (a) as having been selected and has trained model 10 stored in storage 103.

In next step S9, processor 101 obtains the inspection target image from camera 400. In next step S10, processor 101 inspects whether or not a defect is included in the product seen in the inspection target image by using trained model 10 stored in storage 103. Steps S9 and S10 are repeatedly performed.

### <Flow of Sub Routine of Step S2>

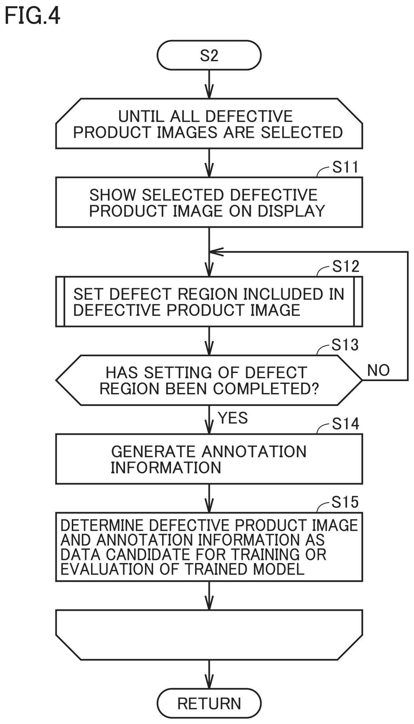

Fig. 4 is a flowchart showing an exemplary flow of a sub routine of step S2 shown in Fig. 3. As shown in Fig. 4, processor 101 performs loop processing for one defective product image 20 successively selected from among at least one defective product image 20 stored in storage 103. The loop processing includes steps S11 to S15.

In step S11, processor 101 controls display controller 104 such that selected defective product image 20 is shown on display 200.

In next step S12, processor 101 sets defect region 21 included in defective product image 20 based on a user operation accepted by input interface 105.

In next step S13, processor 101 determines whether or not setting of defect region 21 has been completed. For example, in response to reception of the user operation to select another defective product image 20, processor 101 determines that setting of defect region 21 has been completed. Alternatively, in response to reception of the user operation indicating completion of setting, processor 101 determines that setting of defect region 21 has been completed.

When setting of defect region 21 has not been completed (NO in step S13), processor 101 has the process return to step S12. When setting of defect region 21 has been completed (YES in step S13), processor 101 has the process proceed to step S14.

In step S14, processor 101 generates annotation information indicating the position of set defect region 21. Processor 101 may incorporate the class label indicating the class of the defect seen in defect region 21 into the annotation information.

In next step S15, processor 101 determines a dataset of selected defective product image 20 and the annotation information as the data candidate for training or evaluation of trained model 10.

### <Setting Screen>

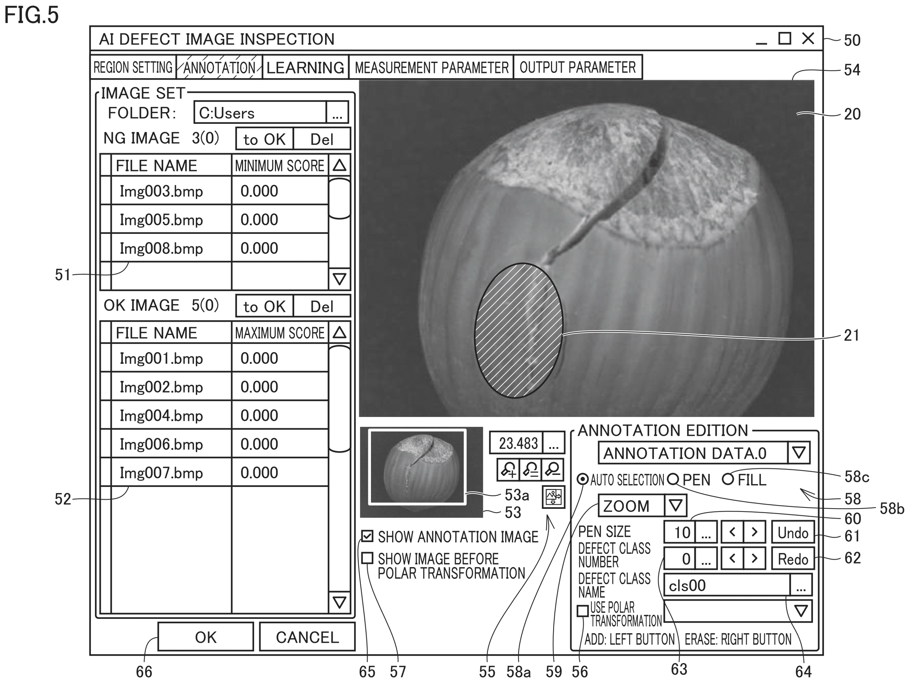

Fig. 5 is a diagram showing an exemplary setting screen shown on the display in step S11. A setting screen 50 shown in Fig. 5 is used for setting defect region 21 in step S12. Processor 101 generates setting screen 50, and display controller 104 has the setting screen shown on display 200.

As shown in Fig. 5, setting screen 50 includes a defective product image list 51, a non-defective product image list 52, regions 53 and 54, and an icon group 55.

Defective product image list 51 is a list of at least one defective product image 20 stored in storage 103. non-defective product image list 52 is a list of at least one non-defective product image 30 stored in storage 103.

In region 53, a thumbnail of one image selected from defective product image list 51 or non-defective product image list 52 is shown. In region 54, the entirety or a part of the one selected image is shown. Specifically, processor 101 has the thumbnail of the selected image shown in region 53 and has the entirety or a part of the selected image shown in region 54. Icon group 55 is used for designation of a magnification factor of the image to be shown in region 54. The magnification factor is designated from values equal to or higher than 100%. Processor 101 enlarges or reduces the image shown in region 54 in accordance with an operation on icon group 55. A frame border 53a in region 53 indicates a portion of the image to be shown in region 54.

When defective product image 20 is selected, the user performs an operation to set defect region 21 while the user views defective product image 20 shown in region 54.

The user readily checks for a defect at a surface of a product in a ring shape by using not the image itself where the product is seen but an image resulting from polar transformation processing (which is referred to as a "polar transformation image" below) of the image. Therefore, setting screen 50 includes checkboxes 56 and 57. As checkbox 56 is marked, processor 101 sets defect region 21 for the polar transformation image. While checkbox 56 has been marked, setting screen 50 accepts a marking input to checkbox 57. While checkbox 57 has not been marked, in setting screen 50, the polar transformation image is shown in region 54. When checkbox 57 has been marked, in setting screen 50, an image yet to be subjected to the polar transformation processing is shown in region 54.

Furthermore, setting screen 50 includes a radio button group 58, input fields 59 and 60, buttons 61 and 62, display fields 63 and 64, a checkbox 65, and a button 66. These display elements are used for setting defect region 21.

Radio button group 58 is used for switching between operation modes. Radio button group 58 includes buttons 58a to 58c. Button 58a is used for selecting a mode (which is referred to as a "semi-automatic mode" below) in which defect region 21 is set in response to the one-click operation. Button 58b is used for selecting a mode (which is referred to as a "manual mode" below) in which defect region 21 is manually drawn in response to the left drag operation and defect region 21 is erased in response to the right drag operation. Button 58c is used to select a mode (which is referred to as a "class selection mode" below) in which the class label to be assigned to defect region 21 is changed in response to the left one-click operation and defect region 21 is erased in response to the right one-click operation. The "semi-automatic mode" is an exemplary "first mode" in the present disclosure.

Input field 59 is set such that an input therein is acceptable only when button 58a is pressed. Input field 59 accepts an input of a size of the partial image to be extracted from defective product image 20. A pull-down list is shown in input field 59 when it is operated. The pull-down list includes such items as "wide range," "detail", and "zoom".

Input field 60 accepts an input only when button 58b is pressed. Input field 60 accepts a thickness of a drawn line.

Button 61 is used for canceling processing in accordance with an operation accepted immediately before. Button 62 is acceptable after button 61 is pressed, and it is used for performing again the canceled processing.

Display fields 63 and 64 are used for registration of the class label. In display field 63, a number for identification of the class of the defect is shown, and an instruction to change the number is accepted therein. In display field 64, a name indicating the class of the defect corresponding to the number shown in display field 63 is shown, and an instruction to change the name is accepted therein.

Checkbox 65 is used for switching representation of defect region 21 and the class label in region 54. Button 66 is used for input of an instruction to complete setting processing.

### <Flow of Sub Routine of Step S12>

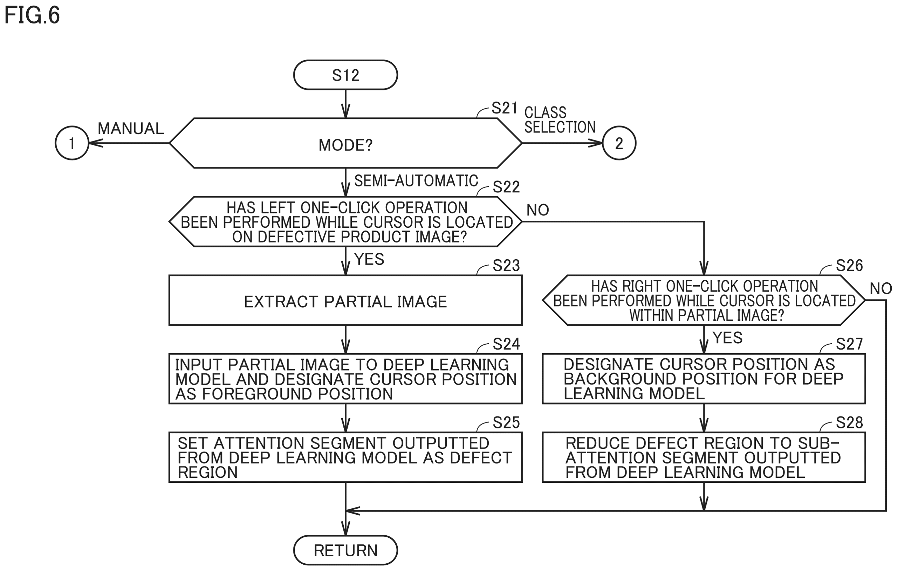

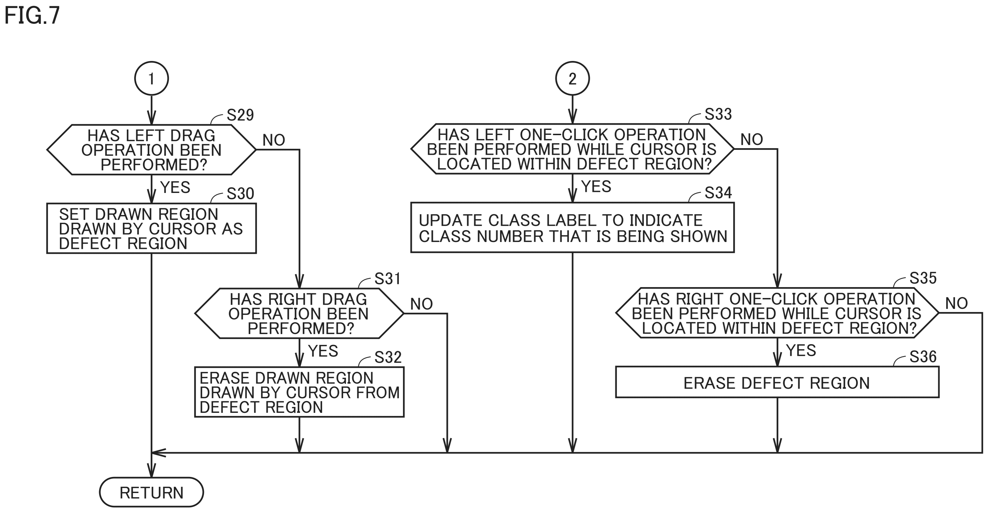

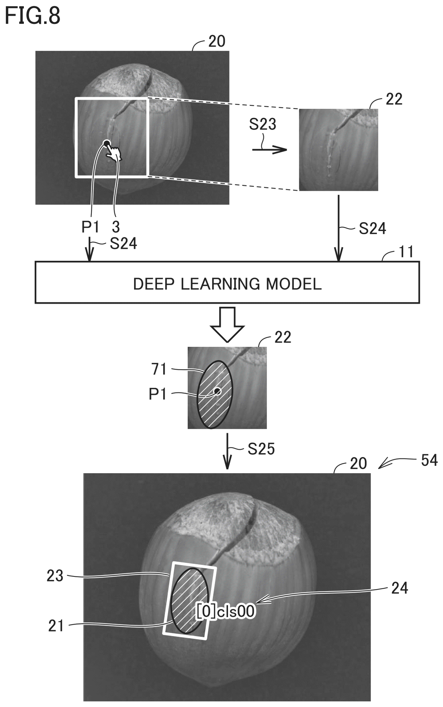

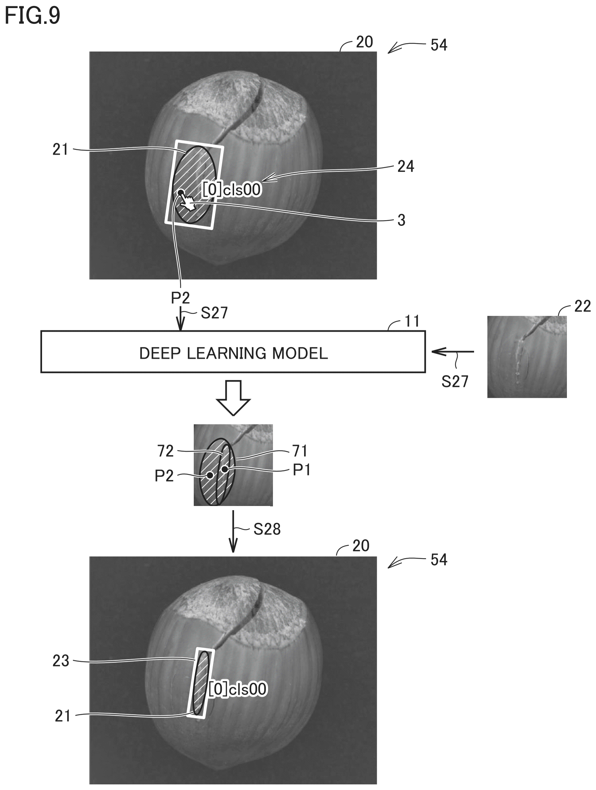

A flow of a sub routine of step S12 shown in Fig. 4 will be described with reference to Figs. 6 to 9. Fig. 6 is a flowchart showing a flow of a part of the sub routine of step S12 shown in Fig. 4. Fig. 7 is a flowchart showing a flow of a remainder of the sub routine of step S12 shown in Fig. 4. Fig. 8 is a diagram illustrating processing in steps S22 to S25 shown in Fig. 6. Fig. 9 is a diagram illustrating processing in steps S26 to S28 shown in Fig. 6.

Initially in step S21, processor 101 checks the operation mode based on marking in radio button group 58. In an example where the operation mode is set to the "semi-automatic mode," processor 101 has the process proceed to step S22. In an example where the operation mode is set to the "manual mode," processor 101 has the process proceed to step S29 (see Fig. 7). In an example where the operation mode is set to the "class selection mode," processor 101 has the process proceed to step S33 (Fig. 7).

In step S22, processor 101 determines whether or not input interface 105 has accepted the left one-click operation while cursor 3 is located on defective product image 20 shown in region 54. When the input interface has accepted the left one-click operation (YES in step S22), processor 101 has the process proceed to step S23. When the input interface has not accepted the left one-click operation (NO in step S22), processor 101 has the process proceed to step S26.

In step S23, processor 101 extracts a partial image 22 having a specific size from defective product image 20 (see Fig. 8). Processor 101 determines the specific size of partial image 22 in accordance with an input to input field 59. In other words, the specific size is variable in accordance with a user input.

Specifically, processor 101 extracts from defective product image 20, as partial image 22, a rectangular region having a first specific size with position P1 of cursor 3 being defined as a center thereof, in accordance with an input of the item "wide range" to input field 59. The first specific size is, for example, 1000 × 1000 pixels.

Processor 101 extracts as partial image 22 from defective product image 20, a rectangular region having a second specific size with position P1 of cursor 3 being defined as the center thereof, in accordance with an input of the item "detail" to input field 59. The second specific size is smaller than the first specific size, and it is, for example, 250 × 250 pixels.

Processor 101 extracts as partial image 22 from defective product image 20, a rectangular region having a specific size in accordance with the magnification factor with position P1 of cursor 3 being defined as the center thereof, in accordance with an input of the item "zoom". The size of partial image 22 is set to be smaller as the magnification factor is higher. In other words, the specific size when a first magnification factor is designated is smaller than the specific size when a second magnification factor higher than the first magnification factor is designated.

In next step S24, processor 101 inputs partial image 22 to deep learning model 11 and designates position P1 of cursor 3 as the foreground position. Deep learning model 11 thus performs segmentation on partial image 22 and outputs an attention segment 71 including designated position P1.

In next step S25, processor 101 sets attention segment 71 outputted from deep learning model 11 as defect region 21. In addition, processor 101 assigns the class label (the number and the name) shown in display fields 63 and 64 to defect region 21.

As described above, deep learning model 11 enlarges or reduces the entire inputted image to a certain size and performs segmentation on the image having the certain size. When the entire defective product image 20 is inputted to deep learning model 11 in an example where the size of the defect is considerably smaller than the size of the entire defective product image 20, deep learning model 11 is highly likely to be unable to output as the attention segment, a group of pixels where the defect is seen. This is because it is difficult for deep learning model 11 to output as the attention segment, a region smaller than the size of an object within the image used for training. In step S24, however, not the entire defective product image 20 but partial image 22 including position P1 and having the specific size is inputted to deep learning model 11. Therefore, deep learning model 11 is more likely to output as attention segment 71, the group of pixels where the defect is seen. Accuracy of setting of defect region 21 is thus enhanced. Consequently, time required for annotation for designation of defect region 21 is reduced.

In particular, in an example where the magnification factor of defective product image 20 shown in region 54 is high, it is assumed that the user is paying attention to a defect relatively small in size. As described above, the size of partial image 22 is set to be smaller as the magnification factor is higher. Therefore, defect region 21 can readily finely be set, and accuracy of setting of defect region 21 is further enhanced. Consequently, time required for annotation for designation of the defect region is reduced.

While checkbox 65 has been marked, defect region 21 is highlighted in region 54 in setting screen 50. For example, in setting screen 50, a colored translucent layer is shown as being overlaid on defect region 21. The user can thus readily recognize the position and the size of defect region 21. Furthermore, in setting screen 50, the color of the layer is preferably made different in accordance with the class label assigned to defect region 21. The user can thus recognize the class label assigned to defect region 21.

Furthermore, in region 54 in setting screen 50, a bounding box 23 around defect region 21 is shown. Bounding box 23 is typically a rotated bounding box. Bounding box 23 is not limited to the rotated bounding box, and it should only be a contour of graphics circumscribing defect region 21. In region 54 in setting screen 50, text 24 representing the class label is shown around defect region 21. The user can thus readily recognize the class label assigned to defect region 21. After step S25, processor 101 has the process proceed to step S3.

In step S26, processor 101 determines whether or not input interface 105 has accepted the right one-click operation while cursor 3 is located within already extracted partial image 22. When partial image 22 has not been extracted, that is, when step S23 has not been performed, processor 101 makes determination as NO in step S26. When the right one-click operation has been accepted (YES in step S26), processor 101 has the process proceeds to step S27. When the right one-click operation has not been accepted (NO in step S26), processor 101 has the process proceed to step S3.

In step S27, for deep learning model 11, processor 101 designates a position P2 (see Fig. 9) of cursor 3 as the background position and designates partial image 22 extracted in immediately preceding step S23. Deep learning model 11 thus converts partial image 22 to a certain size and performs processing below on the image having the certain size. Specifically, deep learning model 11 outputs a sub-attention segment 72 in attention segment 71 set as defect region 21 which includes position P1 (see Fig. 8) designated as the foreground region and does not include position P2 designated as the background position.

In next step S28, processor 101 reduces defect region 21 to sub-attention segment 72 outputted from deep learning model 11. With reduction of defect region 21, in setting screen 50, the size and the position of bounding box 23 are adjusted such that the bounding box circumscribes reduced defect region 21. After step S28, processor 101 has the process proceed to step S3.

When defect region 21 set in response to the left one-click operation is too large, as steps S27 and S28 are performed, the user can reduce, simply by moving the cursor to an unnecessary position and performing the right one-click operation, the defect region to a range not including the unnecessary position. Consequently, time required for annotation for designation of the defect region can be reduced.

As shown in Fig. 7, in step S29, processor 101 determines whether or not input interface 105 has accepted the left drag operation. When the input interface has accepted the left drag operation (YES in step S29), processor 101 has the process proceed to step S30. When the input interface has not accepted the left drag operation (NO in step S29), processor 101 has the process proceed to step S31.

In step S30, processor 101 sets a drawn region drawn by cursor 3 during the left drag operation as defect region 21. At this time, processor 101 determines the size of the drawn region drawn by cursor 3 in accordance with a thickness inputted to input field 60. After step S30, processor 101 has the process proceed to step S3.

In step S31, processor 101 determines whether or not input interface 105 has accepted the right drag operation. When the input interface has accepted the right drag operation (YES in step S31), processor 101 has the process proceed to step S32. When the input interface has not accepted the right drag operation (NO in step S31), processor 101 has the process proceed to step S3.

In step S32, processor 101 erases the drawn region drawn by cursor 3 during the right drag operation from defect region 21. At this time, processor 101 determines the size of the drawn region drawn by cursor 3 in accordance with the thickness inputted to input field 60. After step S32, processor 101 has the process proceed to step S3.

In step S33, processor 101 determines whether or not input interface 105 has accepted the left one-click operation while cursor 3 is located within defect region 21. When the input interface has accepted the left one-click operation (YES in step S33), processor 101 has the process proceed to step S34. When the input interface has not accepted the left one-click operation (NO in step S33), processor 101 has the process proceed to step S35.

In step S34, processor 101 updates the class label of defect region 21 shown at the position of cursor 3 to show a class number shown in display field 63. Therefore, the user can switch the class label assigned to defect region 21 by switching representation in display field 63 to a desired number and then performing the left one-click operation. After step S34, processor 101 has the process proceed to step S3.

In step S35, processor 101 determines whether or not input interface 105 has accepted the right click operation while cursor 3 is located within defect region 21. When the input interface has accepted the right click operation (YES in step S35), processor 101 has the process proceed to step S36. When the input interface has not accepted the right click operation (NO in step S35), processor 101 has the process proceed to step S3.

In step S36, processor 101 erases defect region 21 shown at the position of cursor 3. After step S36, processor 101 has the process proceed to step S3.

As shown in Fig. 4, step S12 may repeatedly be performed. Therefore, processor 101 sets a plurality of defect regions 21 in response to reception of a plurality of times of the left one-click operation in the semi-automatic mode. The user can thus readily set the plurality of defect regions by repeatedly performing the one-click operation.

Processor 101 may perform step S12 a plurality of times while operation modes different from each other are selected. Specifically, processor 101 may perform setting processing in accordance with a certain operation mode, and with a result of the setting processing being taken over, the processor thereafter may perform the setting processing in accordance with another operation mode.

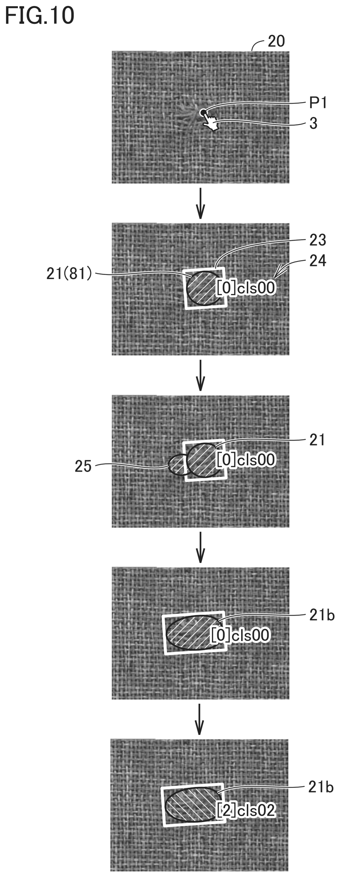

Fig. 10 is a diagram showing exemplary setting processing performed three times in the order of the semi-automatic mode, the manual mode, and the class selection mode. As shown in Fig. 10, processor 101 sets as defect region 21, an attention segment 81 including position P1 of cursor 3, which is outputted from deep learning model 11, in response to reception by input interface 105, of the left one-click operation in the semi-automatic mode. Furthermore, the class label indicating a class number "0" shown in display field 63 is assigned to defect region 21. At this time, defect region 21 is highlighted. Furthermore, bounding box 23 surrounding defect region 21 is also shown. In addition, text 24 representing the class label "0" and a corresponding class name "cls00" is shown around defect region 21.

The user then selects button 58b in radio button group 58 and switches the operation mode to the manual mode. In response to reception by input interface 105, of the left drag operation in this state, processor 101 sets a drawn region 25 drawn by cursor 3 during the left drag operation as the new defect region. The class label indicating the class number "0" selected in display field 63 is assigned to the new defect region. The new defect region is adjacent to defect region 21 already set in the semi-automatic mode. The new defect region and already-set defect region 21 then have the same class label. Therefore, processor 101 sets a defect region 21b which is combination of defect region 21 and the new defect region. In other words, processor 101 enlarges defect region 21 to defect region 21b so as to incorporate drawn region 25. At this time, the class label "0" and the corresponding class name "cls00" are shown around defect region 21b.

The user then selects button 58c in radio button group 58 and switches the operation mode to the class selection mode. The user further switches representation in display field 63 to a class number "2". In addition, the user overlays cursor 3 over defect region 21b. In response to reception by input interface 105, of the left one-click operation in this state, processor 101 switches the class label corresponding to defect region 21b from "0" to "2". Consequently, in setting screen 50, the class label "2" and a corresponding class name "cls002" are shown around defect region 21b. Furthermore, in setting screen 50, the color of the layer shown over defect region 21b is changed.

### <First Modification>

Deep learning model 11 may be trained to output a tracking segment corresponding to the attention segment from each frame image of moving images (video).

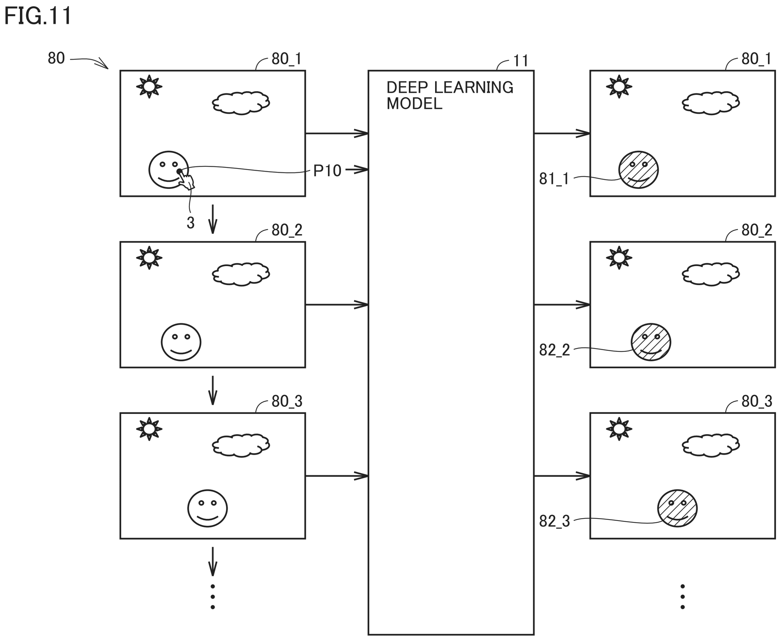

Fig. 11 is a diagram illustrating a tracking function provided by the deep learning model. In an example shown in Fig. 11, deep learning model 11 receives input of moving images 80. Moving images 80 include a first frame image 80_1 and a frame image subsequent to frame image 80_1, that is, second and following frame images 80_2, 80_3, ...

Deep learning model 11 is trained such that, in response to reception of designation of the foreground position for a specific frame image included in moving images, it performs segmentation on the specific frame image and outputs the attention segment including the designated foreground position. Furthermore, deep learning model 11 is trained to output a tracking segment corresponding to an object seen in the attention segment, in the frame image subsequent to the specific frame image. The tracking segment may include not only an object identical to the object seen in the attention segment but also an object similarity of which to the shape of the object seen in the attention segment is equal to or higher than a criterion.

In the example shown in Fig. 11, deep learning model 11 receives designation of a foreground position P10 for frame image 80_1. Therefore, deep learning model 11 performs segmentation on frame image 80_1 and outputs an attention segment 81_1 including designated foreground position P10. Deep learning model 11 then tracks the object seen in attention segment 81_1 in subsequent frame images 80_2, 80_3, ... and outputs tracking segments 82_2, 82_3, ... where the object is seen.

When there is no object seen in attention segment 81_1 in a subsequent frame image, deep learning model 11 does not output the tracking segment.

When a plurality of foreground positions are designated in the specific frame image, deep learning model 11 outputs a plurality of attention segments corresponding to the plurality of foreground positions, respectively. Deep learning model 11 then outputs a plurality of tracking segments corresponding to the plurality of attention segments in a subsequent frame image.

For example, Segment Anything Model 2 (SAM2) published by Meta may be adopted as deep learning model 11 that performs such a tracking function.

Processor 101 of an image inspection apparatus according to a first modification sets defect region 21 by using deep learning model 11 that performs the tracking function.

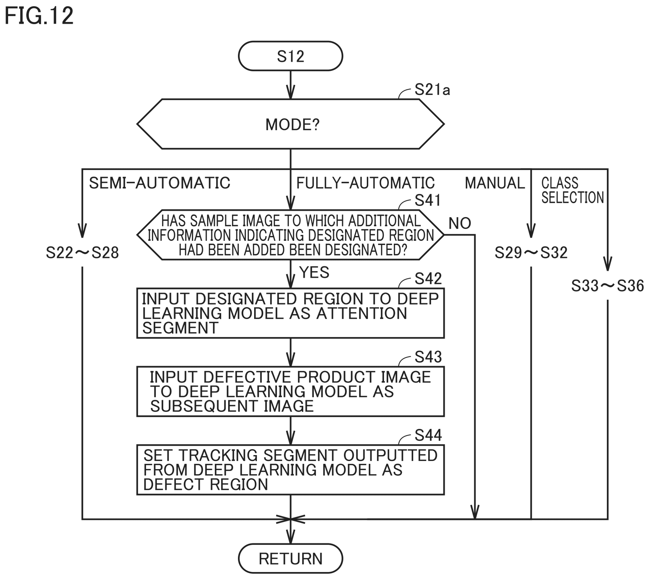

The image inspection apparatus according to the first modification performs processing in accordance with the flow shown in Fig. 3 and performs step S2 in accordance with the flow shown in Fig. 4, as in the embodiment above. The image inspection apparatus according to the first modification, however, performs a flow shown in Fig. 12 instead of the flow shown in Figs. 6 and 7, as the sub routine of step S12 shown in Fig. 4.

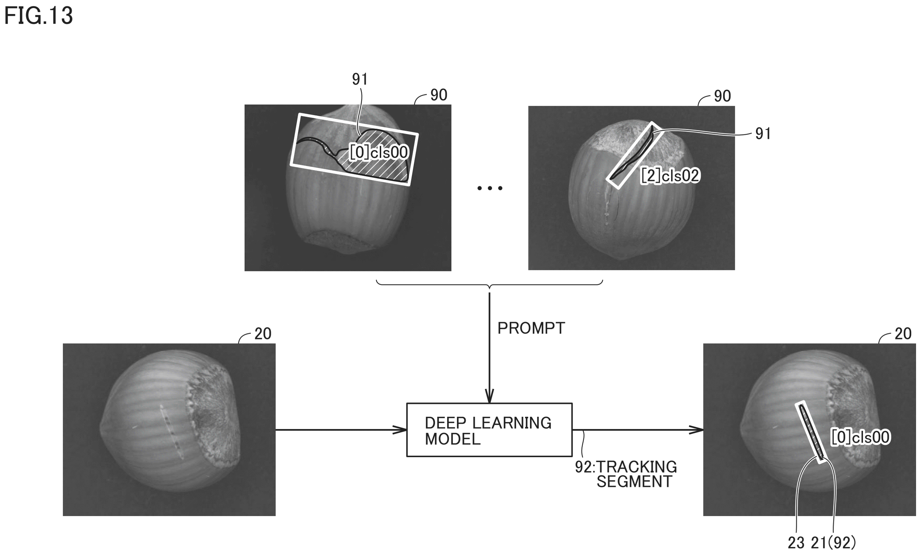

Processing in the image inspection apparatus according to the first modification will be described with reference to Figs. 12 and 13. Fig. 12 is a flowchart showing a flow of the sub routine of step S12 in the image inspection apparatus according to the first modification. Fig. 13 is a diagram illustrating processing in steps S41 to S44 shown in Fig. 12. The flow shown in Fig. 12 is different from the flow shown in Figs. 6 and 7 in including step S21a instead of step S21 and including steps S41 to S44. Therefore, these differences will be described below.

Initially in step S21a, processor 101 checks the operation mode in accordance with the input to the setting screen. In the image inspection apparatus according to the first modification, the operation mode includes a "fully-automatic mode" in addition to the "semi-automatic mode," the "manual mode," and the "class selection mode." Subsequent steps in the example where the operation mode is set to the "semi-automatic mode," the "manual mode," or the "class selection mode" are the same as the steps described in the embodiment above. In an example where the operation mode is set to the "fully-automatic mode," processor 101 has the process proceed to step S41.

In step S41, processor 101 determines whether or not it has received designation of a sample image to which additional information indicating a designated region has been added. In an example shown in Fig. 13, the user designates at least one sample image 90 to which additional information indicating a designated region 91 has been added. The additional information may include the class label for identification of the class of the defect seen in designated region 91. For example, the user prepares as sample image 90, an image to which the additional information has been added, the additional information indicating as designated region 91, the defect region set as a result of the processing in steps S22 to S26 shown in Fig. 6. Alternatively , the user prepares as sample image 90, an image to which the additional information has been added, the additional information indicating as designated region 91, the defect region set as a result of the processing in steps S29 and S30 shown in Fig. 7. Alternatively, the user may prepare sample image 90 to which the additional information has been added, by using another computer.

In next step S42, processor 101 inputs to deep learning model 11 as a prompt, sample image 90 to which the additional information has been added. Specifically, processor 101 inputs sample image 90 to deep learning model 11 as the specific frame image, and inputs as the attention segment, designated region 91 indicated by the additional information to deep learning model 11.

In next step S43, processor 101 inputs as the subsequent frame image, selected defective product image 20 to deep learning model 11.

Deep learning model 11 thus regards sample image 90 and defective product image 20 as two frame images included in moving images and performs the tracking function described with reference to Fig. 11. In other words, deep learning model 11 tracks the object seen in designated region 91 in defective product image 20 and outputs the tracking segment where the object is seen. In an example where a plurality of sample images 90 are inputted to deep learning model 11, deep learning model 11 outputs a tracking segment corresponding to an object seen in any of a plurality of designated regions 91, from defective product image 20.

In next step S44, processor 101 sets the tracking segment outputted from deep learning model 11 as defect region 21. In an example shown in Fig. 13, processor 101 sets a tracking segment 92 as defect region 21. In an example where the additional information includes the class label, processor 101 specifies sample image 90 including designated region 91 corresponding to tracking segment 92. Processor 101 then assigns the class label included in the additional information added to specified sample image 90 to defect region 21.

According to a second modification, the user can automatically set defect region 21 for at least one defective product image 20, simply by preparing a sample image.

### <Second Modification>

Image inspection apparatus 100 may be implemented by a plurality of computer apparatuses. For example, the plurality of computer apparatuses may include a first computer apparatus including support program 40, a second computer apparatus including training program 42, and a third computer apparatus including inspection program 44. In this case, the first computer apparatus corresponds to the "support apparatus" in the present disclosure.

Image inspection apparatus 100 may contain camera 400. In other words, image inspection apparatus 100 and camera 400 may be integrated.

### <Third Modification>

As shown in Fig. 3, as determination as YES is made in step S5, steps S2 to S4 are repeatedly performed. In step S4, trained model 10 outputs a score for the defective product image included in the evaluation data. Furthermore, trained model 10 may output the score also for the defective product image included in the training data. In addition, trained model 10 may output the score also for at least one non-defective product image 30 stored in storage 103.

The score outputted in step S4 may be referred to for revision of the training data. Therefore, as shown in Fig. 5, processor 101 may incorporate the score outputted in most recent evaluation into defective product image list 51 and non-defective product image list 52 in setting screen 50. As described above, the score indicates the similarity to the feature of the defect. Therefore, a minimum value of the score outputted for the defective product image is preferably large. A maximum value of the score outputted for the non-defective product image, on the other hand, is preferably small. Processor 101 then incorporates the minimum value of the score ("minimum score") outputted for each defective product image 20 into defective product image list 51. The user can thus more readily specify defective product image 20 for which annotation should be performed again. Processor 101 incorporates the maximum value of the score ("maximum score") outputted for each non-defective product image 30 into non-defective product image list 52. The user can thus more readily check whether or not an image to be registered as defective product image 20 is erroneously registered as non-defective product image 30.

### <Fourth Modification>

Input apparatus 300 may include another pointing device capable of accepting a click operation and a drag operation, instead of mouse 301. Another pointing device includes, for example, a touch panel, a trackball, and the like. In an example where another pointing device includes only a single type of button, the left one-click operation and the right one-click operation are distinguished from each other in accordance with switching of the operation mode. For example, input interface 105 distinguishes between the left one-click operation and the right one-click operation in accordance with whether or not a checkbox for switching the operation mode has been marked. Similarly, input interface 105 distinguishes between the left drag operation and the right drag operation in accordance with whether or not the checkbox has been marked. The checkbox is shown, for example, on display 200.

### §3 Additional Aspects

As set forth above, the present disclosure includes features as below.

### (Configuration 1)

A support apparatus (100) supports generation of a trained model (10) for inspecting whether a defect is included in a product (2) seen in an inspection target image. The support apparatus includes
a display controller (104) that controls a display (200) to show a defective product image (20) where a defective product is seen,
an input interface (105) that accepts an operation on a cursor (3) on the defective product image (20),
a setting unit (13) that sets a defect region (21) included in the defective product image (20) in accordance with the operation,
a determination unit (14) that determines a set of the defective product image (20) and annotation information (28) indicating the defect region (21) as a data candidate for training or evaluation of the trained model (10), and
a deep learning model (11) trained to perform segmentation on an inputted image and to output an attention segment (71, 81_1) including a foreground position designated within the inputted image.

In response to reception of a first one-click operation by the input interface(105), the setting unit (13)
designates for the deep learning model (11), as the foreground position, a first position indicated by the cursor (3) at the time of the first one-click operation, and
sets a first attention segment (71) outputted from the deep learning model (11) as the defect region (21).

### (Configuration 2)

In the support apparatus (100) described in Configuration 1,
the deep learning model (11) is further trained to output, in response to designation of a background position within the attention segment (71), a sub-attention segment (72) in the attention segment (71), the sub-attention segment including the foreground position and not including the background position,
the input interface (105) accepts a second one-click operation while the cursor (3) indicates a second position within the first attention segment (71) after the first one-click operation, and
in response to the second one-click operation, the setting unit (13)
   designates the second position as the background position for the deep learning model (11), and
   reduces the defect region (21) to the sub-attention segment (72) outputted from the deep learning model (11).

### (Configuration 3)

In the support apparatus (100) described in Configuration 1 or 2,
the input interface (105) accepts a third one-click operation while the cursor (3) indicates a third position outside the first attention segment (71) after the first one-click operation, and
in response to the third one-click operation, the setting unit (13)
   designates the third position for the deep learning model (11), and
   sets a second attention segment outputted from the deep learning model (11) as a new defect region.

### (Configuration 4)

In the support apparatus (100) described in any one of Configurations 1 to 3,
the setting unit (13)
extracts a partial image (22) including the first position and having a specific size from the defective product image (20), and
receives the attention segment outputted from the deep learning model (11) as the first attention segment (71), by inputting the partial image (22) to the deep learning model (11).

### (Configuration 5)

In the support apparatus (100) described in Configuration 4,
the specific size is variable in accordance with a user input.

### (Configuration 6)

In the support apparatus (100) described in Configuration 4,
on the display (200), the defective product image (20) is shown as being enlarged in accordance with a magnification factor designated by a user input, and
the specific size when a first magnification factor is designated is smaller than the specific size when a second magnification factor higher than the first magnification factor is designated.

### (Configuration 7)

In the support apparatus (100) described in any one of Configurations 1 to 6,
the operation includes a drag operation, and
the setting unit (13) incorporates into the defect region (21), a drawn region (25) in the defective product image (20) resulting from the drag operation.

### (Configuration 8)

In the support apparatus (100) described in any one of Configurations 1 to 7,
the deep learning model (11) is further trained to output, in an image (80_2, 80_3) subsequent to the inputted image (80_1), a tracking segment (82_2, 82_3) corresponding to an object seen in the attention segment (81_1) outputted in connection with the inputted image (80_1),
the setting unit (13) includes a first mode in which the defect region (21) is set in accordance with the operation and additionally includes a second mode in which the defect region (21) within the defective product image (20) is set by using a sample image (90), and
in response to selection of the second mode, the setting unit (13) sets as the defect region (21), the tracking segment (92) outputted from the deep learning model (11) when the defective product image (20) and a designated region (91) in the sample image (90) are inputted to the deep learning model (11) as the subsequent image (80_2, 80_3) and the attention segment (81_1).

### (Configuration 9)

A support method is performed by a computer (100) for supporting generation of a trained model (10) for inspecting whether a defect is included in a product (2) seen in an inspection target image.

The computer (100) includes a deep learning model (11), and the deep learning model (11) is trained to perform segmentation on an inputted image and to output an attention segment including a foreground position designated within the inputted image.

The support method includes
causing, by at least one processor (101) of the computer (100), a display (200) to show a defective product image (20) where a defective product is seen,
setting, by the at least one processor (101), a defect region (21) included in the defective product image (20) in accordance with an operation on a cursor (3) on the defective product image (20), and
determining, by the at least one processor (101), a set of the defective product image (20) and annotation information (28) indicating the defect region (21) as a data candidate for training or evaluation of the trained model.

The operation includes a one-click operation.
The setting includes
designating for the deep learning model (11), as the foreground position, a position indicated by the cursor (3) at the time of the one-click operation, in response to the one-click operation, and
setting the attention segment outputted from the deep learning model (11) as the defect region (21).

### (Configuration 10)

A program (40) causes a computer (100) to perform a support method for supporting generation of a trained model (10) for inspecting whether a defect is included in a product (2) seen in an inspection target image.

The computer (100) includes a deep learning model (11), and the deep learning model (11) is trained to perform segmentation on an inputted image and to output an attention segment including a foreground position designated within the inputted image. The support method includes
causing a display (200) to show a defective product image (20) where a defective product is seen,
setting a defect region (21) included in the defective product image (20) in accordance with an operation on a cursor (3) on the defective product image (20), and
determining a set of the defective product image (20) and annotation information (28) indicating the defect region (21) as a data candidate for training or evaluation of the trained model (10).

The operation includes a one-click operation.
The setting includes
designating for the deep learning model (11), as the foreground position, a position indicated by the cursor (3) at the time of the one-click operation, in response to the one-click operation, and
setting the attention segment outputted from the deep learning model (11) as the defect region (21).

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

## Claims

1. A support apparatus (100) that supports generation of a trained model (10) for inspecting whether a defect is included in a product (2) seen in an inspection target image, the support apparatus comprising:
a display controller (104) that controls a display (200) to show a defective product image (20) where a defective product is seen;
an input interface (105) that accepts an operation on a cursor (3) on the defective product image (20);
a setting unit (13) that sets a defect region (21) included in the defective product image (20) in accordance with the operation;
a determination unit (14) that determines a set of the defective product image (20) and annotation information (28) indicating the defect region (21) as a data candidate for training or evaluation of the trained model (10); and
a deep learning model (11) trained to perform segmentation on an inputted image and to output an attention segment (71, 81_1) including a foreground position designated within the inputted image, wherein
in response to reception of a first one-click operation by the input interface (105), the setting unit (13)
designates for the deep learning model (11), as the foreground position, a first position indicated by the cursor (3) at time of the first one-click operation, and
sets a first attention segment (71) outputted from the deep learning model (11) as the defect region (21).

2. The support apparatus (100) according to claim 1, wherein
the deep learning model (11) is further trained to output, in response to designation of a background position within the attention segment (71), a sub-attention segment (72) in the attention segment (71), the sub-attention segment including the foreground position and not including the background position,
the input interface (105) accepts a second one-click operation while the cursor (3) indicates a second position within the first attention segment (71) after the first one-click operation, and
in response to the second one-click operation, the setting unit (13)
designates the second position as the background position for the deep learning model (11), and
reduces the defect region (21) to the sub-attention segment (72) outputted from the deep learning model (11).

3. The support apparatus (100) according to claim 1 or 2, wherein
the input interface (105) accepts a third one-click operation while the cursor (3) indicates a third position outside the first attention segment (71) after the first one-click operation, and
in response to the third one-click operation, the setting unit (13)
designates the third position for the deep learning model (11), and
sets a second attention segment outputted from the deep learning model (11) as a new defect region.

4. The support apparatus (100) according to any one of claims 1 to 3, wherein
the setting unit (13)
extracts a partial image (22) including the first position and having a specific size from the defective product image (20), and
receives the attention segment outputted from the deep learning model (11) as the first attention segment (71), by inputting the partial image (22) to the deep learning model (11).

5. The support apparatus (100) according to claim 4, wherein
the specific size is variable in accordance with a user input.

6. The support apparatus (100) according to claim 4, wherein
on the display (200), the defective product image (20) is shown as being enlarged in accordance with a magnification factor designated by a user input, and
the specific size when a first magnification factor is designated is smaller than the specific size when a second magnification factor higher than the first magnification factor is designated.

7. The support apparatus (100) according to any one of claims 1 to 6, wherein
the operation includes a drag operation, and
the setting unit (13) incorporates into the defect region (21), a drawn region (25) in the defective product image (20) resulting from the drag operation.

8. The support apparatus (100) according to any one of claims 1 to 7, wherein
the deep learning model (11) is further trained to output, in an image (80_2, 80_3) subsequent to the inputted image (80_1), a tracking segment (82_2, 82_3) corresponding to an object seen in the attention segment (81_1) outputted in connection with the inputted image (80_1),
the setting unit (13) includes a first mode in which the defect region (21) is set in accordance with the operation and additionally includes a second mode in which the defect region (21) within the defective product image (20) is set by using a sample image (90), and
in response to selection of the second mode, the setting unit (13) sets as the defect region (21), the tracking segment (92) outputted from the deep learning model (11) when the defective product image (20) and a designated region (91) in the sample image (90) are inputted to the deep learning model (11) as the subsequent image (80_2, 80_3) and the attention segment (81_1).

9. A support method to be performed by a computer (100) for supporting generation of a trained model (10) for inspecting whether a defect is included in a product (2) seen in an inspection target image, the computer (100) including a deep learning model (11), the deep learning model (11) being trained to perform segmentation on an inputted image and to output an attention segment including a foreground position designated within the inputted image, the support method comprising:
causing, by at least one processor (101) of the computer (100), a display (200) to show a defective product image (20) where a defective product is seen;
setting, by the at least one processor (101), a defect region (21) included in the defective product image (20) in accordance with an operation on a cursor (3) on the defective product image (20); and
determining, by the at least one processor (101), a set of the defective product image (20) and annotation information (28) indicating the defect region (21) as a data candidate for training or evaluation of the trained model, wherein
the operation includes a one-click operation, and
the setting includes
designating for the deep learning model (11), as the foreground position, a position indicated by the cursor (3) at time of the one-click operation, in response to the one-click operation, and
setting the attention segment outputted from the deep learning model (11) as the defect region (21).

10. A program (40) for causing a computer (100) to perform a support method for supporting generation of a trained model (10) for inspecting whether a defect is included in a product (2) seen in an inspection target image, the computer (100) including a deep learning model (11), the deep learning model (11) being trained to perform segmentation on an inputted image and to output an attention segment including a foreground position designated within the inputted image, the support method comprising:
causing a display (200) to show a defective product image (20) where a defective product is seen;
setting a defect region (21) included in the defective product image (20) in accordance with an operation on a cursor on the defective product image (20); and
determining a set of the defective product image (20) and annotation information (28) indicating the defect region (21) as a data candidate for training or evaluation of the trained model (10), wherein
the operation includes a one-click operation, and
the setting includes
designating for the deep learning model (11), as the foreground position, a position indicated by the cursor (3) at time of the one-click operation, in response to the one-click operation, and
setting the attention segment outputted from the deep learning model (11) as the defect region (21).
